(19) Europäisches Patentamt

European Patent Office

Office européen des brevets

(11) **EP 2 717 459 A1**

(12) **DEMANDE DE BREVET EUROPEEN**

(43) Date de publication:
**09.04.2014 Bulletin 2014/15**

(51) Int Cl.:
***H02M 7/48*** (2007.01)

(21) Numéro de dépôt: **12187121.4**

(22) Date de dépôt: **03.10.2012**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(71) Demandeur: **Belenos Clean Power Holding AG 2502 Bienne (CH)**

(72) Inventeurs:
• **Toth, Antoine**
  **2800 Delémont (CH)**
• **Leuppi, Yvan**
  **1463 Rovray (CH)**

(74) Mandataire: **Giraud, Eric et al**
  **ICB**
  **Ingénieurs Conseils en Brevets SA**
  **Faubourg de l'Hôpital 3**
  **2001 Neuchâtel (CH)**

(54) **Convertisseur CC/CA avec tension intermédiaire sinusoïdale redressée décalée et fonctionnement onduleur MLI**

(57) L'invention concerne un module électrique (100) pour adapter un premier signal d'un premier système à un second signal d'un second système comprenant :
- une entrée agencée pour qu'une source d'alimentation (101) puisse y être connectée, ladite source d'alimentation fournissant un premier signal, ce premier signal étant une tension continue,
- un module convertisseur (102) agencé pour transformer la tension d'alimentation en un signal intermédiaire redressé composé d'une composante continue et d'une composante sinusoïdale ;
- un module onduleur (103) agencé pour fournir en sortie un signal compatible avec un second signal d'un second système.

Fig. 1

EP 2 717 459 A1

**Description**

L'invention concerne un module électrique pour adapter un premier signal d'un premier système à un second signal d'un second système comprenant :

- une entrée agencée pour qu'une source d'alimentation puisse y être connectée, ladite source d'alimentation fournissant un premier signal, ce premier signal étant un signal continu,

- un module convertisseur agencé pour transformer la tension d'alimentation en un signal intermédiaire composé d'une composante continue et d'une composante sinusoïdale redressée;

- un module onduleur agencé pour fournir en sortie un signal compatible avec un second signal d'un second système.

ARRIERE PLAN TECHNOLOGIQUE

Il est connu des systèmes électriques dont le but est de rendre un signal compatible avec un réseau électrique. Un exemple de ses systèmes électriques comprend une alimentation électrique fournissant un signal continu, la sortie de cette alimentation est connectée à un module convertisseur fournissant un signal continu. Ce signal est envoyé à un module onduleur qui va transformer ce signal en un signal compatible avec le réseau, en l'occurrence un signal sinusoïdal.

Dans les systèmes actuels, la valeur de ce signal continu est définie de sorte à pouvoir fournir la valeur de tension du signal de sortie. Par exemple, pour un réseau fonctionnement à une tension efficace de 230VAC, la tension maximale sera de 325V c'est à dire la tension efficace multipliée par $\sqrt{2}$.

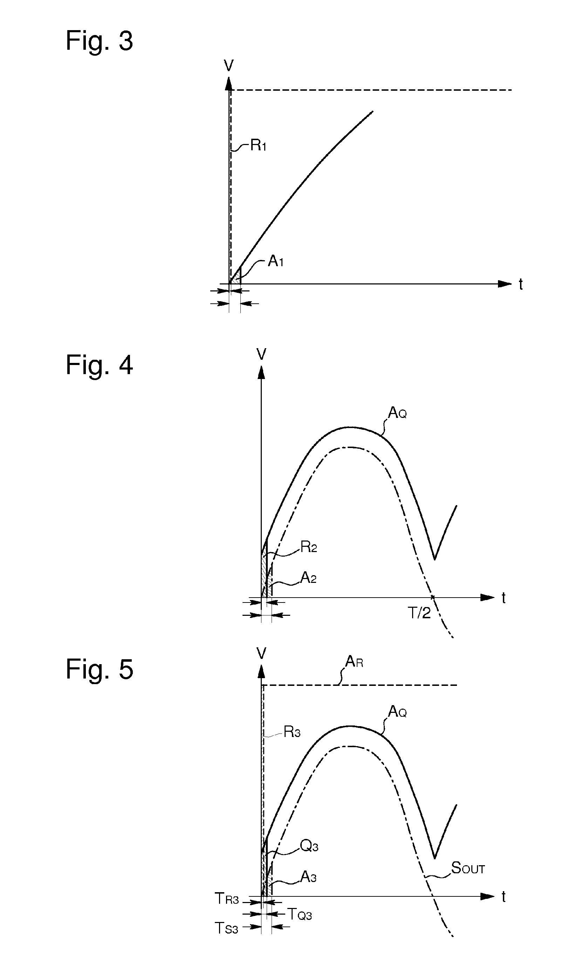

Or, un inconvénient de ce système est qu'il engendre des pertes de commutation importantes. En effet, la transformation du signal sortant du module convertisseur par le module onduleur se fait par intervalle de temps. Cela signifie que le signal sinusoïdal de sortie est construit par petit bout, chaque petits bouts étant une partie du signal final. Chaque petit bout du signal sinusoïdal final représente une surface A1, la somme de ses surfaces A1 formant le signal sinusoïdal allant sur le réseau. De ce fait, lors de la conversion du signal continu en signal sinusoïdal, le module onduleur va commuter. Cette commutation dure un temps défini, ce temps étant défini de sorte que la surface R1 de la composante continue soit identique à la surface A1 comme visible à la figure 3. Par conséquent, lorsque la surface A1 est très petite, la durée de commutation du module onduleur doit être très petite. De ce fait, cette commutation d'une forte tension entraîne l'apparition de pertes de commutation importantes.

RESUME DE L'INVENTION

L'invention a pour but de pallier les inconvénients de l'art antérieur en proposant de fournir un système électronique adaptant un premier signal vers un second signal qui engendre le moins de pertes possible.
A cet effet, l'invention concerne un module électrique pour adapter un premier signal d'un premier système a un second signal d'un second système comprenant :

- une entrée agencée pour qu'une source d'alimentation puisse y être connectée, ladite source d'alimentation fournissant un premier signal, ce premier signal étant un signal continu,

- un module convertisseur agencé pour transformer la tension d'alimentation en un signal intermédiaire composé d'une composante continue et d'une composante sinusoïdale redressée;

- un module onduleur agencé pour fournir en sortie un signal compatible avec un second signal d'un second système,

**caractérisé en ce que** ledit module onduleur est agencé pour utiliser le signal intermédiaire et le transforme en signal sinusoïdal compatible avec un second signal dudit second système.
Dans un premier mode de réalisation avantageux, ledit module onduleur comprend un pont en H.
Dans un second mode de réalisation avantageux, il comprend en outre un microcontrôleur permettant de contrôler ledit module convertisseur.
Dans un autre mode de réalisation avantageux, le module convertisseur comprend au moins un bloc régulateur comprenant un transformateur connecté en série avec des moyens de commutation, lesdits moyens de commutation étant commandé par ledit microcontrôleur.
Dans un autre mode de réalisation avantageux, ledit module convertisseur comprend au moins deux blocs régulateurs connectés en parallèle par leurs sorties, en parallèle ou en série ou une combinaison série et parallèle par leurs entrées, les entrées des blocs étant flottantes, les blocs régulateurs étant commandés par modulation de largeur d'impulsion.
L'invention concerne également un procédé de fonctionnement d'un module électrique pour adapter un premier signal d'un premier système à un second signal d'un second système, ledit module comprenant

- une entrée agencée pour qu'une source d'alimentation puisse y être connectée, ladite source d'alimentation fournissant un premier signal, ce premier signal étant un signal continu,

- un module convertisseur agencé pour transformer la tension d'alimentation en un signal intermédiaire composé d'une composante continue et d'une composante sinusoïdale redressée ;

- un module onduleur agencé pour fournir en sortie un signal compatible avec un second signal d'un second système **caractérisé en ce que** le procédé comprend les étapes suivantes :

- fournir à l'entrée dudit module électrique le premier signal ;

- convertir, par l'intermédiaire du module convertisseur, le premier signal en un signal intermédiaire comprenant une composante continue et composante sinusoïdale redressée;

- transformer le signal intermédiaire en un signal compatible avec le second signal du second système.

Dans un autre mode de réalisation avantageux, la composante sinusoïdale du signal intermédiaire et le second signal ont la même fréquence.

BREVE DESCRIPTION DES FIGURES

Les buts, avantages et caractéristiques du module électronique et du procédé selon la présente invention apparaîtront plus clairement dans la description détaillée suivante d'au moins une forme de réalisation de l'invention donnée uniquement à titre d'exemple non limitatif et illustrée par les dessins annexés sur lesquels :

- La figure 1 représente schématiquement le module électronique selon l'invention
- Les figures 2 et 6 représentent schématiquement chacune une variante de l'invention;
- Les figures 3 à 5 représente schématiquement des diagrammes de tensions du module électronique selon l'invention ;

DESCRIPTION DETAILLEE

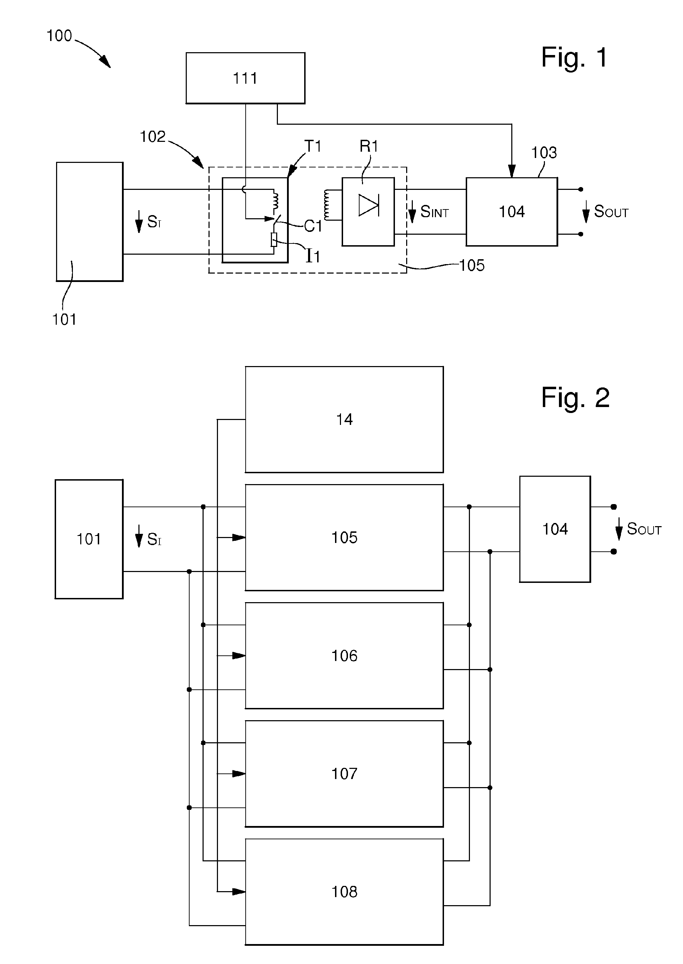

Sur la figure 1, un système électronique 100 selon l'invention est représenté. Le système électronique est un module électrique 100 pour adapter un premier signal $S_I$ d'un premier système à un second signal $S_{out}$ d'un second système. Le premier système peut être une alimentation électrique 101 fournissant une tension continue. Par exemple, cette alimentation électrique 101 peut être un ou plusieurs panneaux solaires ou une ou plusieurs éoliennes ou une ou plusieurs batteries ou autres. Le second système est par exemple le réseau électrique domestique c'est-à-dire une tension sinusoïdale.

La tension continue en sortie de l'alimentation entre dans un module convertisseur 102. Ce module convertisseur comprend au moins un bloc régulateur 105. Dans une variante visible à la figure 2, il peut être prévu que le module convertisseur comprenne plusieurs blocs régulateur 106, 107 et 108 montés en parallèle par leurs sorties, en parallèle ou en série ou un mélange des deux par leurs entrées, les entrées des blocs étant flottantes.

Le bloc régulateur comprend un transformateur T1 en série avec des moyens de commutation C1. Le bloc régulateur 105 comprend en outre un moyen de mesure de courant I1 monté en série des moyens de commutations C1. Le transformateur T1, les moyens de commutation C1 et le moyen de mesure de courant I1 sont montés en parallèle d'un premier moyen de découplage monté en parallèle de l'alimentation 101 et non représenté. Le bloc régulateur 105 comprend également un redresseur R1 connecté en sortie du transformateur T1 pour fournir un signal intermédiaire. On comprend donc que le bloc régulateur 105 comprend son propre redresseur. Le module convertisseur 102 comprend en outre un microcontrôleur 111. Ce microcontrôleur 111 est utilisé pour commander le bloc régulateur.

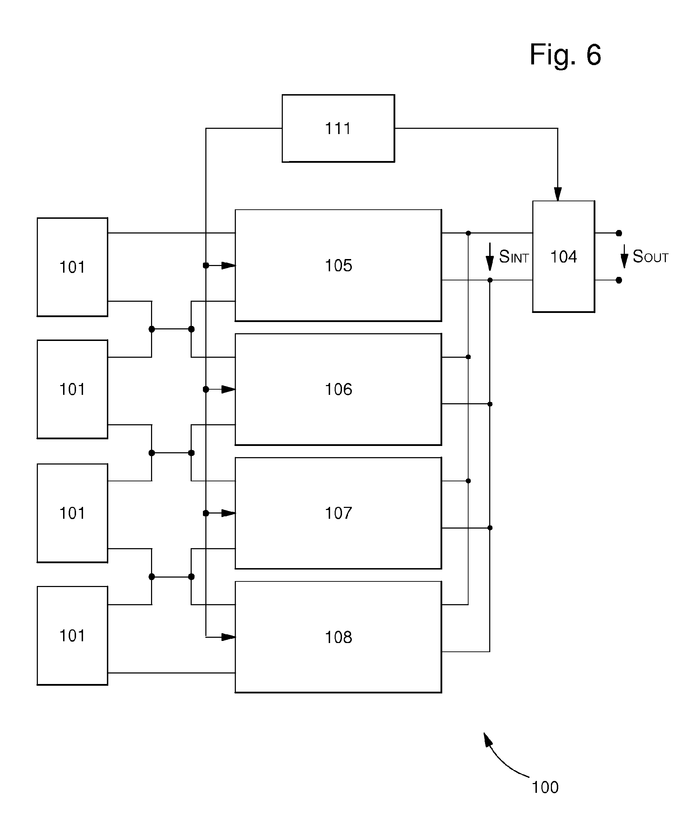

Dans le cas où le module convertisseur comprend des blocs régulateurs 105, 106, 107 et 108 en parallèle ou en série ou une combinaison parallèle et série, le microcontrôleur 111 commande chaque bloc régulateur 105, 106, 107 et 108 par modulation de largeur d'impulsion. Dans ce cas-là, le microcontrôleur 111 opère une seule commande pour tous les blocs régulateurs. Dans le cas où on a plusieurs alimentations électriques 101 en parallèle ou en série, la commande des blocs régulateurs peut être distincte pour chaque bloc régulateur ou ensemble de blocs régulateurs comme visible à la figure 6.

Dans une autre variante de la présente invention, il est envisageable que la commande des blocs régulateurs 105, 106, 107 et 108 soit déphasée. En effet, la commande par décalage de signal signifie qu'à chaque période de temps, un bloc régulateur est activé. Cela signifie que chaque bloc régulateur est activé une fois toutes les quatre périodes.

Or, la présente variante prévoit que les blocs régulateurs soient activés dans la même période mais déphasés. Cela signifie donc que lors de chaque période, la totalité des blocs régulateurs 105, 106, 107 et 108 sont activés de sorte qu'un seul bloc régulateur 105, 106, 107 et 108 soit actif à un instant donné.

Dans le cas présent, le décalage est d'un quart de période soit T/4 de sorte qu'à l'instant t = 0, le premier bloc régulateur 105 s'active, avec une largeur d'impulsion allant de 0 à T/4. A t = T/4, le second bloc régulateur 106 s'active. A t = T/2, le troisième bloc régulateur 107 s'active et à t = 3T/4, le quatrième bloc régulateur 108 s'active.

Cette façon de commander les blocs régulateurs permet de virtuellement augmenter la fréquence de fonctionnement. En effet, au lieu de voir une activation de blocs régulateurs 105, 106, 107 et 108 par période, on voit quatre activations par période. Plus particulièrement, ce sont les moyens de découplage qui voient une augmentation de la fréquence d'activation des blocs régulateurs 105, 106, 107 et 108.

Or, les condensateurs ont une impédance qui est dépendante de la fréquence. Par conséquent, si la fréquence augmente, il est possible de réduire la valeur du condensateur tout en gardant la même impédance. De plus, comme la taille et les coûts d'un condensateur sont liés à sa valeur en farad, une diminution de celle-ci entraîne une diminution de la taille et du prix des condensateurs des moyens de découplage sans diminuer l'efficacité de ces moyens de découplage.

Le signal intermédiaire Sint est envoyé à un module onduleur 103. Le module onduleur 103 comprend un circuit de type pont en H 104. Ce type de circuit se présente sous la forme d'une pluralité de commutateurs disposé en H. On comprend alors que ledit pont en H comprend deux branches parallèles constituées chacune de deux commutateurs en série. Le pont en H 104 alimente une charge qui se trouve être la branche centrale reliant les deux branches parallèles, cette branche centrale est connectée à chaque branche au niveau du point de connexion entre les deux commutateurs.

Le pont peut être commandé de manière à faire varier la polarité de la tension de charge de façon cyclique pour en faire un onduleur, le microcontrôleur 111 étant agencé pour envoyer des signaux de commande aux commutateurs du pont en H 104. Ce pont en H 104 est utilisé comme onduleur pour transformer le signal intermédiaire Sint connecté à son entrée en un signal compatible avec le réseau.

Avantageusement selon l'invention, le signal intermédiaire Sint est un signal sinusoïdal redressé et est utilisé pour former le signal de sortie compatible avec le réseau. Ce signal intermédiaire comprend une composante continue $S_R$ c'est-à-dire un signal continu d'amplitude prédéfinie et une composante sinusoïdale redressée $S_Q$. Ce signal intermédiaire Sint se présente sous la forme d'un signal en demi sinus ou sinus redressé, c'est à dire que les portions sinusoïdales sont toutes positives. En d'autres termes, ce signal intermédiaire est composé d'une composante continue et d'un sinus redressé.

Cette configuration a l'avantage de diminuer les pertes par commutation. En effet, comme visible sur la figure 4, le signal intermédiaire Sint présente une forme proche de de la forme du signal de sortie du système électronique et se différencie du signal de sortie du système électronique par son amplitude et par sa forme redressée. De ce fait, lors de la transformation du signal intermédiaire Sint en signal compatible avec le réseau, le temps de commutation est augmenté. Pour cela, le signal intermédiaire Sint sera généré par ledit module convertisseur 102 pour qu'elle puisse avoir une fréquence identique à la fréquence de sortie. Par exemple, pour le réseau électrique suisse ou français, la fréquence est de 50Hz, le module convertisseur doit alors généré un signal intermédiaire dont la composante sinusoïdale a une fréquence de 50Hz. Toutefois, de par la forme intrinsèque du signal intermédiaire, celui-ci aura une fréquence double par rapport au signal du réseau.

En effet, il a été décrit précédemment que pour créer un élément partiel du signal de sortie d'une durée t2, le module onduleur 103 doit, dans cet intervalle de temps t2, commuter le signal entrant c'est-à-dire le signal intermédiaire Sint pendant un instant calculée de sorte que la surface R2 de ce signal intermédiaire commuté soit égale à la surface A2 de l'élément partiel du signal de sortie. Or, la surface est généralement une fonction de la hauteur et de la largeur. Ce qui signifie que si la hauteur diminue, la largeur doit augmenter pour obtenir une surface constante, et inversement.

Dans le cas de la présente invention, la configuration d'avoir le signal intermédiaire Sint ayant une forme proche du signal de sortie permet d'avoir un écart d'amplitude entre l'amplitude du signal intermédiaire Sint et l'amplitude du signal de sortie $S_{out}$ qui est faible. Au contraire, si on utilise un signal continu ayant une amplitude continue constante, l'écart avec l'amplitude du signal de sortie est variable et peut être très élevé.

Dès lors, pour obtenir une surface A3 d'une durée $T_{S3}$ du signal de sortie visible à la figure 5, le signal intermédiaire Sint doit être commuté durant un temps $T_{Q3}$ afin d'obtenir une surface Q3 équivalente à la surface A3 alors que pour atteindre le même objectif un signal continu selon l'art antérieur doit être commuté durant un temps $T_{R3}$ afin d'obtenir une surface R3. Il est alors constaté que la durée du temps $T_{Q3}$ est plus importante que la durée du temps $T_{R3}$.

Par conséquent, le fait d'utiliser le signal intermédiaire Sint pour former le signal de sortie permet d'avoir un module onduleur 103 qui commute des niveaux de tensions plus faibles permettant de réduire considérablement les pertes par commutations. Le fonctionnement du système électronique 100 est par conséquent optimisé. De plus, le fait de commuter des niveaux de tensions plus faibles a pour conséquences que le courant présente un ondulation également moins élevées. Ce courant fourni par le pont en H 104 et qui est injecté dans le réseau est donc de meilleur qualité.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées.

## Revendications

1. Module électrique (100) pour adapter un premier signal ($S_I$) d'un premier système a un second signal ($S_{out}$) d'un second système comprenant :

   - une entrée agencée pour qu'une source d'alimentation (101) puisse y être connectée, ladite source d'alimentation fournissant le premier signal, ce premier signal étant un signal continu,
   - un module convertisseur (102) agencé pour transformer la tension d'alimentation en un signal intermédiaire (Sint) composé d'une composante continue et d'une composante sinusoïdale redressée;

- un module onduleur (104) agencé pour fournir en sortie un signal compatible avec un second signal d'un second système,

**caractérisé en ce que** ledit module onduleur est agencé pour utiliser le signal intermédiaire et le transformer en signal sinusoïdal compatible avec un second signal dudit second système.

2. Module électronique selon la revendication 1, **caractérisé en ce que** ledit module onduleur comprend un pont en H (104).

3. Module électronique selon les revendications 1 ou 2, **caractérisé en ce qu'il** comprend en outre un microcontrôleur (111) permettant de contrôler ledit module convertisseur.

4. Module électronique selon une des revendications précédentes, **caractérisé en ce que** le module convertisseur comprend au moins un bloc régulateur (105) comprenant un transformateur (T1) connecté en série avec des moyens de commutation (C1), lesdits moyens de commutation étant commandé par ledit microcontrôleur.

5. Module électronique selon la revendication 4, **caractérisé en ce que** ledit module convertisseur (102) comprend au moins deux blocs régulateurs (105, 106) connectés en parallèle par leurs sorties, en parallèle ou en série ou une combinaison des deux par leurs entrées, les entrées des blocs étant flottantes, les blocs régulateurs étant commandé par modulation de largeur d'impulsion.

6. Procédé de fonctionnement d'un module électrique (100) pour adapter un premier signal ($S_l$) d'un premier système a un second signal (Sout) d'un second système, ledit module comprenant

    - une entrée agencée pour qu'une source d'alimentation (101) puisse y être connectée, ladite source d'alimentation fournissant un premier signal, ce premier signal étant une tension continue,

    - un module convertisseur (102) agencé pour transformer la tension d'alimentation en un signal intermédiaire (Sint) redressé composé d'une composante continue et d'une composante sinusoïdale ;

    - un module onduleur (103) agencé pour fournir en sortie un signal compatible avec un second signal d'un second système **caractérisé en ce que** le procédé comprend les étapes suivantes :
    - fournir à l'entrée dudit module électrique le premier signal ;

    - convertir, par l'intermédiaire du module convertisseur (102), le premier signal en un signal intermédiaire comprenant une composante continue et une composante sinusoïdale;

    - transformer le signal intermédiaire en un signal compatible avec le second signal du second système.

7. Procédé de fonctionnement selon les revendications 6 ou 7, **caractérisé en ce que** la composante sinusoïdale du signal intermédiaire et le second signal ont la même fréquence.

100

Fig. 1

111

102

T1        R1        103

101          S_I          C1        S_INT        104        S_OUT

I1

105

Fig. 2

14

101        S_I        105        104        S_OUT

106

107

108

Fig. 3

Fig. 4

Fig. 5

Fig. 6

Europäisches
Patentamt

European
Patent Office

Office européen
des brevets

**RAPPORT DE RECHERCHE EUROPEENNE**

Numéro de la demande

EP 12 18 7121

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | JP 2007 174866 A (TOSHIBA CORP; TOSHIBA CONSUMER MARKETING; TOSHIBA KADEN SEIZO KK) 5 juillet 2007 (2007-07-05) * abrégé; figures 1,2,5,6,8 * ----- | 1-7 | INV. H02M7/48 |
| A | US 2003/012038 A1 (WELCHES RICHARD S [US] ET AL WELCHES RICHARD SHAUN [US] ET AL) 16 janvier 2003 (2003-01-16) * figures 1-3,5A,5B * * colonne 7, alinéas 2,7 * * colonne 8, ligne 49 - colonne 10, ligne 18, 42-52 * ----- | 1-7 | |
| A | US 2011/103117 A1 (YONEDA FUMIIKI [JP]) 5 mai 2011 (2011-05-05) * figures 1-6 * * alinéas [0075] - [0077] * ----- | 1-7 | |
| A | US 2011/058396 A1 (OPPERMANN HANS [DE]) 10 mars 2011 (2011-03-10) * figures 1-3 * * alinéas [0014], [0017], [0018], [0021] * ----- | 1-7 | DOMAINES TECHNIQUES RECHERCHES (IPC) |
| A | EP 1 531 542 A2 (SHARP KK [JP]) 18 mai 2005 (2005-05-18) * figures 2,3,4,8,9 * ----- | 4,5 | H02M |
| A | EP 2 466 741 A1 (BELENOS CLEAN POWER HOLDING AG [CH]) 20 juin 2012 (2012-06-20) * figure 2 * * alinéa [0036] * ----- | 4,5 | |

Le présent rapport a été établi pour toutes les revendications

| Lieu de la recherche | Date d'achèvement de la recherche | Examinateur |
|---|---|---|
| La Haye | 14 février 2013 | Kail, Maximilian |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
..............................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 12 18 7121

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-02-2013

| Document brevet cité au rapport de recherche | | Date de publication | Membre(s) de la famille de brevet(s) | | Date de publication |
|---|---|---|---|---|---|
| JP 2007174866 | A | 05-07-2007 | JP | 4907982 B2 | 04-04-2012 |
| | | | JP | 2007174866 A | 05-07-2007 |
| US 2003012038 | A1 | 16-01-2003 | AU | 4179502 A | 27-05-2002 |
| | | | US | 2003012038 A1 | 16-01-2003 |
| | | | WO | 0241462 A2 | 23-05-2002 |
| US 2011103117 | A1 | 05-05-2011 | CN | 102055367 A | 11-05-2011 |
| | | | EP | 2341606 A1 | 06-07-2011 |
| | | | JP | 2011097787 A | 12-05-2011 |
| | | | US | 2011103117 A1 | 05-05-2011 |
| US 2011058396 | A1 | 10-03-2011 | DE | 102006002698 A1 | 02-08-2007 |
| | | | EP | 1974446 A2 | 01-10-2008 |
| | | | US | 2011058396 A1 | 10-03-2011 |
| | | | WO | 2007082753 A2 | 26-07-2007 |
| EP 1531542 | A2 | 18-05-2005 | EP | 1531542 A2 | 18-05-2005 |
| | | | JP | 2005151662 A | 09-06-2005 |
| | | | US | 2005105224 A1 | 19-05-2005 |
| EP 2466741 | A1 | 20-06-2012 | EP | 2466741 A1 | 20-06-2012 |
| | | | WO | 2012080482 A1 | 21-06-2012 |

EPO FORM P0460

Pour tout renseignement concernant cette annexe : voir Journal Officiel de l'Office européen des brevets, No.12/82